(19)

Europäisches Patentamt
European Patent Office
Office européen des brevets

(11) **EP 2 712 133 A1**

(12) **EUROPEAN PATENT APPLICATION**

(43) Date of publication:
**26.03.2014 Bulletin 2014/13**

(51) Int Cl.:
***H04L 12/70*** *(2013.01)*

(21) Application number: **12290306.5**

(22) Date of filing: **19.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
- **Li, Muy-Chu**
  **91620 Nozay (FR)**
- **Mauger, Christophe**
  **78141 Velizy (FR)**

(74) Representative: **El Manouni, Josiane**
**Alcatel-Lucent International**
**32, avenue Kléber**
**92700 Colombes (FR)**

(54) **Quality of service differentiation during congestion on an internal interface of a packet network**

(57)    In an embodiment, there is provided a method for Quality of Service differentiation during congestion on an internal interface of a packet network, said method comprising the steps of, at a node of said network multiplexing traffic of different users for transmission over said interface while determining a bit-rate per user for said transmission over said interface:
- determining a user's minimum bit-rate, per user or group of users,
- reducing said bit-rate per user, while guarantying either said user's minimum bit-rate , or a portion of said user's minimum bit-rate, depending on congestion level.

FIG_4

## Description

The present invention generally relates to communication networks and systems, in particular (though not limited to) mobile communication networks and systems.

Detailed descriptions of mobile communication networks and systems can be found in the literature, such as in particular Technical Specifications published by standardisation bodies such as for example 3GPP (3rd Generation Partnership Project).

Examples of packet mobile communication systems include 3G systems (such as for example UMTS) and their evolutions such as HSDPA (High Speed Downlink Packet Access), or LTE (Long Term Evolution) also called 4G systems or Evolved Packet System (EPS).

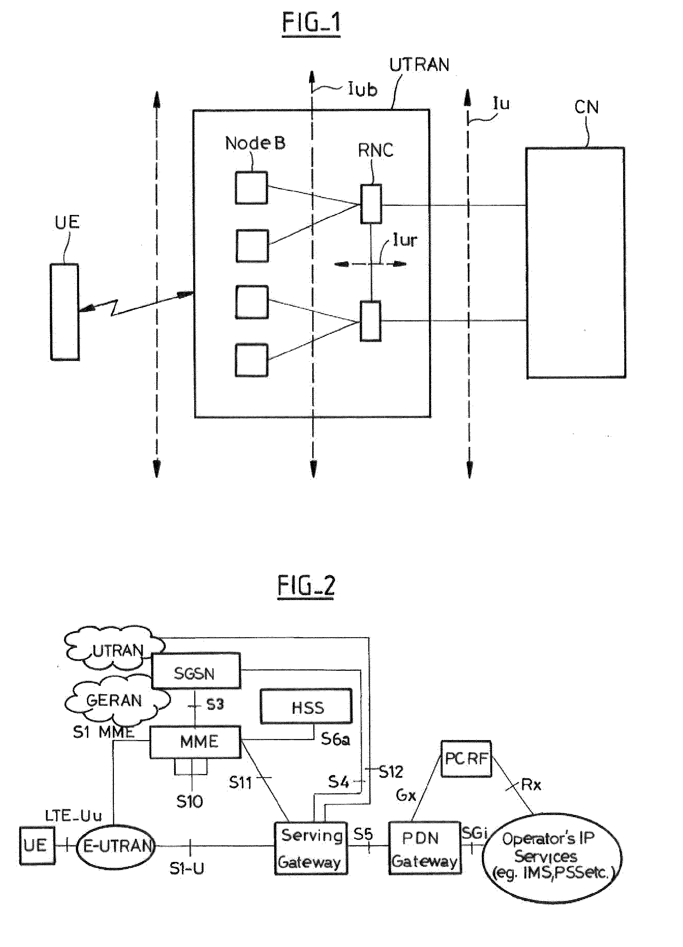

An example of architecture for a system such as for example UMTS is recalled in figure 1. The system comprises a mobile network communicating with mobile stations or UEs (User Equipments) and with external networks (not specifically illustrated). The mobile network comprises a Radio Access Network (RAN) also called UTRAN (UMTS Terrestrial Radio Access Network), and a Core Network (CN). UTRAN comprises different network nodes such as Base Station (also called Node B), and Radio Network Controller (RNC), and different network interfaces between these network nodes, such as in particular lub-interface between Node B and RNC. A description of protocols on these interfaces can be found in corresponding Technical Specifications published by 3GPP.

HSDPA introduces new protocols and procedures such as a HS-DSCH capacity allocation procedure, whereby the Node B sends so-called credits to the RNC for each user data flow (also called MAC-d flow). The RNC multiplexes different user data flows for transmission over lub interface, and determines the bit-rate to be transmitted over the lub interface for each of these user data flows, taking into account various parameters including: amount of data received for transmission over lub interface, credits received from the Node B, lub bandwidth...etc.

lub congestion may occur for various reasons, such as a high number of users and/or a high volume of data to be transmitted for these users, such as for example when a number of connected but not active users simultaneously become active again.

Quality of Service (QoS) is one of the most important issues in packet communication networks. There is a need to provide Quality of Service (QoS) differentiation during congestion on an internal interface of a packet network (such as congestion on lub interface in an UMTS/HSDPA network).

Embodiments of the present invention in particular address such needs.

These and other objects are achieved, in one aspect of the present invention, by a method for Quality of Service differentiation during congestion on an internal interface of a packet network, said method comprising the steps of, at a node of said network multiplexing traffic of different users for transmission over said interface while determining a bit-rate per user for said transmission over said interface:

- determining a user's minimum bit-rate, per user or group of users,
- reducing said bit-rate per user, while guarantying either said user's minimum bit-rate, or a portion of said user's minimum bit-rate, depending on congestion level.

These and other objects are achieved, in other aspects of the present invention, by a network node configured to carry out such Quality of Service differentiation during congestion. Examples of such network nodes include RNC connected to Node B over lub-interface in an UMTS/HSDPA network, Serving Gateway S-GW connected to eNode B over S1-interface in an LTE/EPS network, ...etc. An example of architecture for a system such as for example LTE/EPS, taken from 3GPP specifications, is recalled in figure 2.

Some embodiments of apparatus and/or methods in accordance with embodiments of the present invention are now described, by way of example only, and with reference to the accompanying drawings, in which:

- Figure 1 is intended to recall, in a simplified way, an example of architecture of a mobile system such as for example UMTS,
- Figure 2 is intended to recall, in a simplified way, an example of architecture of a mobile system such as for example LTE/EPS,
- Figure 3 is a first diagram intended to illustrate, in a simplified way, QoS differentiation during congestion, according to an embodiment of the present invention,
- Figure 4 is a second diagram intended to illustrate, in a simplified way, QoS differentiation during congestion, according to an embodiment of the present invention,
- Figure 5 is intended to illustrate, in a simplified way, a network node configured for carrying out QoS differentiation during congestion, by way of example on lub interface, according to an embodiment of the present invention.

In the following, embodiments of the present invention will more particularly be described, by way of example, for the case of UMTS/HSDPA. However, embodiments of the present invention are not limited to such case, and would also apply for example to LTE/EPS.

Possible solutions for QoS differentiation during congestion on an interface such as lub-interface in UMTS/HSDPA could include following solutions.

A possible solution would be to enable the network to allocate resources to users during IUB congestion (as network capacity is limited) according to the user's category (e.g. top priority, medium priority or low priority user).

However, such solution would only enable to differentiate 3 categories of users (e.g. top priority, medium priority or low priority users). Some Telecom operators would like to offer a larger granularity of QoS Differentiation to their subscribers.

Another possible solution would be to base user's priority on Scheduling Priority Indicator (SPI) that is the result of a combination of Allocation Retention Priority (ARP) and Traffic Handling Priority (THP) parameters (ARP and THP corresponding to QoS parameters defined in 3G/UMTS).

However, SPI has only 16 possible values (from 0 to 15). Thus, such solution would only enable QoS Differentiation with 16 minimum bit rate values. That is not enough for some Telecom operators.

A minimum bit-rate could be defined per user priority and, in case of congestion, the bit rate of Low priority users could be reduced first till they get their minimum bit rate. If the congestion persists, the bit rate of Medium priority users and then the High priority users could be reduced to their corresponding minimum bit-rates. In case of no congestion, the High priority users' throughput could be increased firstly, the Medium priority users' throughput secondly and the Low priority users' throughput at last.

However such approach for QoS differentiation based on the respect of a minimum bit-rate is not satisfying, and there is a need for another approach, enabling in particular better sharing of the effects of hard congestion between users. In other words, drawbacks of such solution would include:

- Such solution would only offer QoS Differentiation with 16 minimum bit rate values. There is a need to provide a larger granularity of QoS Differentiation (more than 16 categories).
- Such solution would not be satisfying for QoS differentiation based on the respect of a minimum bit-rate, and there is a need for another approach, in particular enabling better sharing of the effects of hard congestion between users.

Embodiments of the present invention in particular enable to solve part or all of such problems or avoid part or all of such drawbacks.

In an embodiment, a QoS differentiation management is provided, that will guarantee for all subscribers their minimum bit rate (or a portion of said minimum bit-rate if not possible to guarantee said minimum bit-rate) as throughput in case of traffic congestion at IUB level.

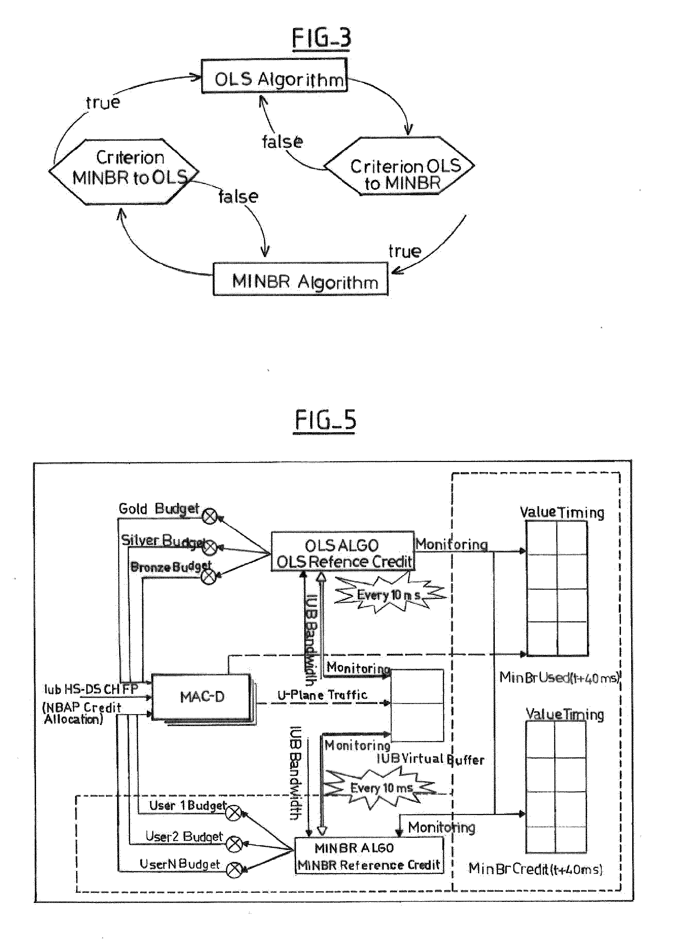

Figure 3 gives an overview of an embodiment of the present invention.

Two modules or algorithms are provided, as well as two modules or triggers that enable to perform the transition between these two algorithms when needed:

- An algorithm referred to as OLS Algorithm (also noted OLS ALGO): This module may be used in case of moderate congestion (e.g. ΣMinBrUsed < lub Bandwidth as will be more detailed later) to guarantee users' minimum bit rate MinBr. The throughput of all users is increased to their minimum bit rates. The remaining available lub bandwidth can be redistributed to all users (no lub bandwidth loss), as a function of user's category, e.g. top priority, medium priority, or low priority user. An example of OLS algorithm is more detailed in Figure 5.
- An algorithm referred to hereinafter as MINBR Algorithm (also noted MINBR ALGO): This module may be used in case of hard congestion (e.g. ΣMinBrUsed> lub Bandwidth as will be more detailed later). All users' throughput may be reduced proportionally to their minimum bit rates. An example of MINBR algorithm is more detailed in Figure 5.
- Criterion of transition from OLS to MINBR algorithm: This criterion may be used to trigger from OLS to MINBR algorithm when a condition is fulfilled. An example of this criterion is more detailed in Figure 5.
- Criterion of transition from MINBR to OLS algorithm: This criterion may be used to trigger from MINBR to OLS algorithm when a condition is fulfilled. An example of this criterion is more detailed in Figure 5.

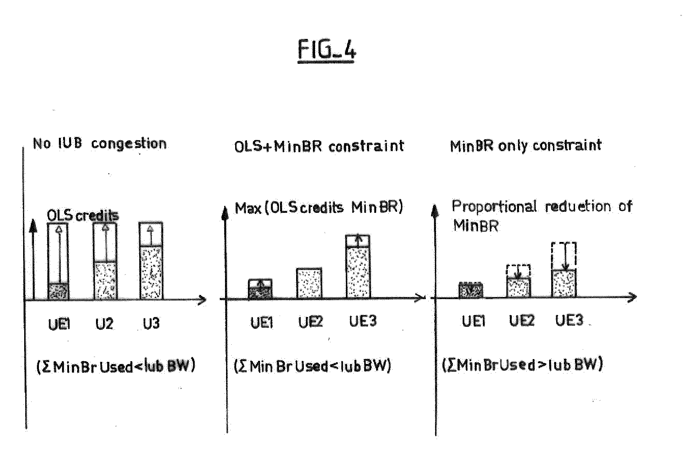

Possible states are illustrated in Figures 3 and 4.

- In case of no congestion or in case of light congestion whereby none of the user data flows is limited at its minimum bit-rate, telecom operators can choose between two options, by configuring OLS weight parameters:

  • All users have the same bit rate (in this case, the OLS weight of all users should have the same value e.g. OLSWeight(top priority) = OLSWeight(medium priority)=OLSWeight(low priority)=100%).
  • The throughput of users can be increased according to their related OLS weight (e.g. as example, the OLS weight should be configured as follows: OLSWeight(top priority)=100%, OLSWeight(medium priority)=50%, OLSWeight(low priority)=25%).

- In case of moderate congestion, OLS algorithm is triggered.
- In case of hard congestion, MINBR algorithm is triggered.

In the example illustrated in Figure 4, there are three users: UE1, UE2, UE3 having different user's category (e.g. top priority, medium priority, or low priority user). For example, UE1 is a low priority user, UE2 a medium priorityuser, and UE1 a top priority user.

In the example illustrated in Figure 4:

- In case of no congestion or in case of light congestion (as illustrated in the left part of Figure 4), a maximum bit-rate (noted OLS credits) allowed per user is computed by OLS algorithm: in the illustrated example, all users have the same allowed maximum bit-rate.
- In case of moderate congestion (as illustrated in the middle part of Figure 4), each user's bit-rate is reduced. A maximum bit-rate allowed per user is determined as the highest of: a maximum bit-rate (OLS credits) allowed per user as computed by OLS algorithm, and a guaranteed minimum bit-rate MinBr. For example the maximum bit-rate allowed for UE1 and UE3 is the allowed maximum bit-rate as computed by OLS algorithm, whereas the maximum bit-rate for UE2 is its guaranteed minimum bit-rate MinBr.
- In case of hard congestion (as illustrated in the right part of Figure 4), each user's bit-rate is reduced to a portion of its MinBr, this portion being computed by MINBR algorithm.

Figure 5 illustrates an embodiment applying more particularly to 3G technology. As already mentioned, embodiments of the present could also apply to other technologies such as in particular LTE technology.

Different functions/modules may be provided, including:

- OLS ALGO: An example of algorithm implemented by this module is illustrated in Figure 5. This module enables to manage QoS Differentiation in case of moderate congestion at IUB level. In case of moderate congestion, this module reduces the bit rate of users according to their OLS priority (e.g. top priority, medium priority, low priority).

The OLS algorithm defines a user reference credit that basically is the low priority user credit (e.g. the maximum throughput of a low priority UE).

The OLS algorithm monitors a virtual buffer on the IUB to recalculate the user credit reference (every 10ms).

The OLS budget enables to ensure the proportionality between the throughputs taken as a reference the *UserCredit* as the budget for low prority users. The OLS budget computation (also called *OLSBudgetPerUE*) may be done as follows:

*UserCredit*(t + 1)=*UserCredit*(t) + *K'*×(*IubExpetedData* - *Iub* R*eceivedData*) *with*

$$K' = \frac{OLSWeight(Low\,Priority)}{\sum_{OLS} NbUsers(OLS) \times OLSWeight(OLS)}$$ and $OLS = [Top\,Priority,...,Medium\,Priority,...,Low\,Priority]$

and $$OLSBudgetPerUE(OLS) = \frac{OLSWeight(OLS)}{OLSWeight(Low\,Priority)} \times UserCredit(t)$$

where:

- IubExpectedData is the volume of data to be sent during the next 10ms. To avoid too fast or slow variation on the IUB expected data, the IubExpectedData may be computed (using a parameter noted α) every 10 ms as follows:

$$IubExpectedData = QoS3Iub + \alpha \times \left(IubBufferT\arg et - IubVirtualBuffer\right)$$

With:

*Qos3Iub* is the available bandwidth.
*IubVirtualBuffer* is the volume of data buffered on the IUB.

*IubBufferTarget* is the target level of the virtual buffer on the IUB. *IubBufferTarget* may be a percentage (noted β) of the total Iub bandwidth over 10ms (also called *Th0*). By default, it may be configured as follows:

$$IubBufferT \arg et = \beta \times Th0$$

- *IubReceivedData* is the volume of data that has been received globally.
- *OLSWeight* is the weight to be applied for OLS budget computation according to users' category (e.g. top priority, medium priority, or low priority user). These values can be configured at operator level.

In order to guarantee the maximum throughput of each UE with the respect of its related minimum bite rate, two modifications may have to done in this OLS management:

- The OLS weight for top priority, medium priority, low prority may be configured to 100% to disable QoS Differentiation based on users' priority (e.g. top priority, medium priority, low priority)
- The OLS UE budget calculation may be modified as follows:

$$Budget(user) = MAX(Conf\_MinBR(user), OLSBudgetPerUE(OLS))$$
$$with \quad OLS = [Top\Pr iority,...,Medium\Pr iority,...,Low\Pr iority]$$
$$and \quad OLSBudgetPerUE(OLS) = \frac{OLSWeight(OLS)}{OLSWeight(Low\Pr iority)} \times UserCredit(t)$$

An embodiment such as the above-described embodiment enables to combine QoS Differentiation management based on users' category (e.g. top priority, medium priority, or low priority user) and QoS Differentiation management based on the respect of users' minimum bit rate.

It is noted that a defense case mechanism can be needed to avoid RLC retransmission when the maximum throughput of an UE is too low.

- **MINBR ALGO:** This module enables to manage QoS Differentiation in case of hard congestion at IUB level. In case of hard congestion, as the network capacity is limited, user's minimum bit rate cannot be guaranteed: the throughput of each user is proportionally reduced to each user's minimum bit rate. For example, the telecom operator can choose to configure each user's minimum bit rate or he can define a group of minimum bit rate values related to a group of users (for example by combining QoS parameters such as THP, ARP and Maximum Bit Rate MBR).

The MinBR User Reference Credit (or also *MinBrCreditOver10ms*) corresponds to a ratio to be applied to each UE minimum bit rate in order to get its maximum throughput in case of IUB congestion.

MinBR User Reference Credit calculation may be as follows:

$$MinBrCreditOver10ms(t+1) = MinBrCreditOver10ms(t)$$
$$+ K' \times (IubExpectedData - Iub\operatorname{Re}ceivedData)$$
$$with \quad K' = \frac{MinBrCreditOver10ms(t)}{Iub\operatorname{Re}ceivedData}$$

Alternatively, MinBR User Reference Credit calculation may be as follows:

$$MinBrCreditOver10ms(init) = \frac{Th0}{MinBrUsedOver10ms(t)}$$

$$MinBrCreditOver10ms(t+1) = \frac{IubExpectedData(t+1) \times MinBrCreditOver10ms(t)}{IubReceivedData}$$

The MinBR budget is derived from *MinBrCreditOver10ms*. The MinBR budgets are computed to guarantee users' throughput proportionally to users' minimum bit rate (also named *Conf_MinBR(user)*). The calculation is done every 10ms as follows:

$$Budget(user) = Conf\_MinBR(user) \times MinBrCreditOver10ms(t)$$

In case of hard congestion, a defense case mechanism can be needed to avoid RLC retransmission when the maximum throughput of an UE is too low.

- **MinBrUsed Monitoring:** The *MinBrUsed* parameter corresponds to the amount of data consumed by each UE related to its minimum bit rate during 40ms. 40 ms is a configurable period value that may be recommended for the MinBrUsed monitoring to avoid ping pong between OLS algorithm and MINBR algorithm.

Every 10ms, the system can evaluate and monitor this parameter in order to trigger MINBR algorithm from OLS algorithm when needed.

$$MinBrUsedO\,ver10ms(t) = MinBrUsedO\,ver10ms(t-1) + Iub\,Re\,ceivedData\,(user)$$
$$If \quad MinBrUsedO\,ver10ms(t) > Conf\_MinBR\,(user) \quad then$$
$$MinBrUsedO\,ver10ms(t) = Conf\_MinBR\,(user)$$
$$MinBrUsed\,(t+40ms) = \sum_{t=t+10ms}^{t+40ms} MinBrUsedO\,ver10ms(t)$$

The criterion for the transition from OLS to MINBR algorithm can be performed every 10 ms, for example as follows:

$$\sum_{t=t+10ms}^{t+40ms} MinBrUsedO\,ver10ms(t) > 4 \times IubExpecte\,dData$$

- MinBrCredit Monitoring: The *MinBrCredit* parameter corresponds to a ratio to be applied to each UE (e.g. User Equipment) minimum bit rate in order to proportionally guarantee each UE minimum bit rate in case of IUB congestion. Every 10 ms, the system can evaluate and monitor this parameter in order to get out of MINBR algorithm and to trigger OLS algorithm when needed.

The criterion for the transition from MINBR to OLS algorithm can be performed every 10ms, for example as follows:

$$MinBrCredit = \sum_{t=t+10ms}^{t+40ms} MinBrCreditOver10ms(t) > 4 \times Threshold$$
$$with \quad Threshold = 114\% \quad \in \quad [0...200\%]$$

Embodiments of the present invention enable, in particular:

- To guarantee at IUB level that each UE has a maximum throughput that respects user's minimum bit rate (or MinBr). In case of hard congestion, the maximum throughput will be proportionally reduced to each UE minimum bit rate.
- To ensure that the IUB bandwidth is fully used.
- In case of no IUB congestion, each UE can have the same maximum throughput, according to the telecom operator's configuration.

Advantages of embodiments of the present invention include, in particular:

- Embodiments of the present invention can be applied to 3G or 4G technology.
- Embodiments of the present invention offer a larger granularity of QoS differentiation management.
- Embodiments of the present invention enable to combine QoS Differentiation management based on users' category (e.g. top priority, medium priority, or low priority user) and QoS Differentiation management based on the respect of users' minimum bit rate. Whatever the level of congestion, there is a QoS mechanism that regulates the traffic for all services; it is either based on throughput differentiation or MinBr differentiation, depending on the level of congestion.
- Embodiments of the present invention offer another approach for QoS differentiation based on the respect of a minimum bit-rate, in particular enabling better sharing of the effects of hard congestion between users.

In one aspect, there is provided a method for Quality of Service differentiation during congestion on an interface of a packet network.
Various embodiments are provided, which may be taken alone or in combination, according to various combinations.
In an embodiment, said method comprises the steps of, at a node of said network multiplexing traffic of different users for transmission over said interface while determining a bit-rate per user for said transmission over said interface:

- determining a user's minimum bit-rate, per user or group of users,
- reducing said bit-rate per user, while guarantying either said user's minimum bit-rate, or a portion of said user's minimum bit-rate, depending on congestion level.

In an embodiment:

- said portion of said user's minimum bit-rate increases, respectively decreases, when said congestion level decreases, respectively increases.

In an embodiment, said method comprises a step of:

- determining said user's minimum bit-rate, using at least one parameter identifying said user or said user's traffic, and a pre-defined association between said at least one parameter and said user's minimum bit-rate.

In an embodiment:

- said at least one parameter includes at least one QoS parameter assigned for said user's traffic.

In an embodiment:

- said at least one parameter corresponds to a combination of QoS parameters including Allocation Retention Priority ARP, Traffic Handling Priority THP, Maximum Bit Rate MBR.

In an embodiment, said method comprises a step of:

- determining said user's minimum bit-rate, by retrieving said user's minimum bit-rate or information enabling to derive said user's minimum bit-rate, configured in said network node.

In an embodiment, said method comprises a step of:

- in case of moderate congestion level whereby said user's minimum bit-rate can be guaranteed, determining a maximum bit-rate allowed per user, by distributing, between said different users, a remaining available bandwidth not used for transmission of guaranteed users' minimum bit-rates.

In an embodiment, said method comprises a step of:

- in case of moderate congestion level whereby said minimum bit-rate per user can be guaranteed, implementing an algorithm for determining a maximum bit-rate allowed per user as a function of congestion level, and determining a maximum bit-rate allowed per user as the highest of:

  • said user's minimum bit-rate,
  • a maximum bit-rate determined by implementing said algorithm.

In an embodiment, said method comprises a step of:

- said algorithm determining said maximum bit-rate allowed per user, according to user category e.g. top priority, medium priority, or low priority user.

In an embodiment, said method comprises a step of:

- in case of hard congestion level whereby said portion of said user's minimum bit-rate can be guaranteed, implementing an algorithm for determining said portion of said user's minimum bit-rate, as a function of congestion level.

In an embodiment, said method comprises a step of:

- determining said congestion level by monitoring an amount of data buffered in a buffer, referred to as virtual buffer, representing an amount of traffic buffered on said interface.

In an embodiment, said method comprises a step of:

- monitoring an amount of data buffered in said virtual buffer by comparing an amount of data received for transmission over said interface, to an amount of data expected to be sent over said interface, said amount of data expected to be sent being determined taking into account an available bandwidth for said transmission over said interface as well as a target for said amount of data buffered in said virtual buffer.

In an embodiment, said method comprises a step of:

- while implementing said algorithm, determining if a condition is fulfilled for implementing, instead, an algorithm for determining said portion of said user's minimum bit-rate in case of hard congestion level whereby said portion of said user's minimum bit-rate can be guaranteed.

In an embodiment, said method comprises a step of:

- while implementing said algorithm, determining if a condition is fulfilled for implementing, instead, an algorithm for determining a maximum bit-rate allowed per user in case of moderate congestion level whereby said user's minimum bit-rate can be guaranteed.

In an embodiment, said method comprises a step of:

- determining if said condition is fulfilled by determining if an amount of data expected to be sent over said interface becomes insufficient for transmission of guaranteed users' minimum bit-rates.

In an embodiment, said method comprises a step of:

- determining if said condition is fulfilled by determining if said portion of said user's minimum bit-rate becomes higher than a given threshold.

In another aspect, there is a provided a network node configured to carry out such Quality of Service differentiation during congestion. Examples of such network nodes include RNC connected to Node B over Iub-interface in UMTS/HSDPA, Serving Gateway S-GW connected to eNode B over S1-interface in LTE/EPS, ...etc.

The detailed implementation of such configuration does not raise any special problem for a person skilled in the art, and therefore does not need to be more fully disclosed than has been made above, for a person skilled in the art.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

**Claims**

1. A method for Quality of Service differentiation during congestion on an internal interface of a packet network, said method comprising the steps of, at a node of said network multiplexing traffic of different users for transmission over said interface while determining a bit-rate per user for said transmission over said interface:

   - determining a user's minimum bit-rate, per user or group of users,
   - reducing said bit-rate per user, while guarantying either said user's minimum bit-rate, or a portion of said user's minimum bit-rate, depending on congestion level.

2. A method according to claim 1, wherein:

   - said portion of said user's minimum bit-rate increases, respectively decreases, when said congestion level decreases, respectively increases.

3. A method according to claim 1 or 2, comprising a step of:

   - determining said user's minimum bit-rate, using at least one parameter identifying said user or said user's traffic, and a pre-defined association between said at least one parameter and said user's minimum bit-rate.

4. A method according to claim 3, wherein:

   - said at least one parameter includes at least one QoS parameter assigned for said user's traffic.

5. A method according to claim 3 or 4, wherein:

   - said at least one parameter corresponds to a combination of QoS parameters including Allocation Retention Priority ARP, Traffic Handling Priority THP, Maximum Bit Rate MBR.

6. A method according to any of claims 1 to 5, comprising a step of:

   - determining said user's minimum bit-rate, by retrieving said user's minimum bit-rate or information enabling to derive said user's minimum bit-rate, configured in said network node.

7. A method according to any of claims 1 to 6, comprising a step of:

   - in case of moderate congestion level whereby said user's minimum bit-rate can be guaranteed, determining a maximum bit-rate allowed per user, by distributing, between said different users, a remaining available bandwidth not used for transmission of guaranteed users' minimum bit-rates.

8. A method according to any of claims 1 to 7, comprising a step of:

   - in case of moderate congestion level whereby said minimum bit-rate per user can be guaranteed, implementing an algorithm for determining a maximum bit-rate allowed per user as a function of congestion level, and determining a maximum bit-rate allowed per user as the highest of:

     • said user's minimum bit-rate,
     • a maximum bit-rate determined by implementing said algorithm.

9. A method according to claim 8, comprising a step of:

- said algorithm determining said maximum bit-rate allowed per user, according to user category e.g. top priority, medium priority, or low priority user.

10. A method according to any of claims 1 to 9, comprising a step of:

- in case of hard congestion level whereby said portion of said user's minimum bit-rate can be guaranteed, implementing an algorithm for determining said portion of said user's minimum bit-rate, as a function of congestion level.

11. A method according to any of claims 1 to 10, comprising a step of:

- determining said congestion level by monitoring an amount of data buffered in a buffer, referred to as virtual buffer, representing an amount of traffic buffered on said interface.

12. A method according to claim 11, comprising a step of:

- monitoring an amount of data buffered in said virtual buffer by comparing an amount of data received for transmission over said interface, to an amount of data expected to be sent over said interface, said amount of data expected to be sent being determined taking into account an available bandwidth for said transmission over said interface as well as a target for said amount of data buffered in said virtual buffer.

13. A method according to claim 8 or 9, comprising a step of:

- while implementing said algorithm, determining if a condition is fulfilled for implementing, instead, an algorithm for determining said portion of said user's minimum bit-rate in case of hard congestion level whereby said portion of said user's minimum bit-rate can be guaranteed.

14. A method according to claim 10, comprising a step of:

- while implementing said algorithm, determining if a condition is fulfilled for implementing, instead, an algorithm for determining a maximum bit-rate allowed per user in case of moderate congestion level whereby said user's minimum bit-rate can be guaranteed.

15. A method according to claim 13, comprising a step of:

- determining if said condition is fulfilled by determining if an amount of data expected to be sent over said interface becomes insufficient for transmission of guaranteed users' minimum bit-rates.

16. A method according to claim 14, comprising a step of:

- determining if said condition is fulfilled by determining if said portion of said user's minimum bit-rate becomes higher than a given threshold.

17. A packet network node, such as Radio Network Controller RNC connected to Node B over Iub-interface in UMTS/HSDPA network or Serving Gateway S-GW connected to eNode B over S1-interface in LTE/EPS network, said network node configured to perform QoS differentiation during congestion according to any of claims 1 to 16.

## FIG_1

## FIG_2

## FIG_3

## FIG_5

# FIG_4

No IUB congestion

OLS credits

UE1   U2   U3

($\Sigma$ MinBr Used < Iub BW)

OLS+MinBR constraint

Max (OLS credits Min BR)

UE1   UE2   UE3

($\Sigma$ Min Br Used < Iub BW)

MinBR only constraint

Proportional reduction of MinBR

UE1   UE2   UE3

($\Sigma$ MinBr Used > Iub BW)

Europäisches
Patentamt

European
Patent Office

Office européen
des brevets

**EUROPEAN SEARCH REPORT**

Application Number

EP 12 29 0306

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 028 798 A1 (ERICSSON TELEFON AB L M [SE]) 25 February 2009 (2009-02-25)<br>* abstract *<br>* paragraph [0001] - paragraph [0002] *<br>* paragraph [0010] - paragraph [0018] *<br>* paragraph [0021] - paragraph [0022] *<br>* paragraph [0025] *<br>* paragraph [0049] *<br>* claims 1-4,15-18 *<br>* figures 3-6 *<br>----- | 1-17 | INV.<br>H04L12/70 |
| A | WO 99/45736 A1 (ERICSSON TELEFON AB L M [SE]) 10 September 1999 (1999-09-10)<br>* abstract *<br>* page 16, line 12 - page 18, line 23 *<br>* figure 2 *<br>----- | 1-17 | |
| | | | TECHNICAL FIELDS SEARCHED (IPC)<br><br>H04L |

The present search report has been drawn up for all claims

| Place of search | Date of completion of the search | Examiner |
|---|---|---|
| Munich | 13 March 2013 | Schrembs, Gerd |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 12 29 0306

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2013

| Patent document cited in search report | | Publication date | Patent family member(s) | | Publication date |
|---|---|---|---|---|---|
| EP 2028798 | A1 | 25-02-2009 | AT | 556509 T | 15-05-2012 |
| | | | AU | 2008290542 A1 | 26-02-2009 |
| | | | CN | 101836400 A | 15-09-2010 |
| | | | CN | 101997773 A | 30-03-2011 |
| | | | EP | 2028798 A1 | 25-02-2009 |
| | | | EP | 2249527 A1 | 10-11-2010 |
| | | | ES | 2385749 T3 | 31-07-2012 |
| | | | JP | 2010537532 A | 02-12-2010 |
| | | | JP | 2011082987 A | 21-04-2011 |
| | | | KR | 20100077150 A | 07-07-2010 |
| | | | MA | 31619 B1 | 02-08-2010 |
| | | | PL | 2028798 T3 | 30-11-2012 |
| | | | PT | 2028798 E | 03-07-2012 |
| | | | US | 2010238805 A1 | 23-09-2010 |
| | | | US | 2011080831 A1 | 07-04-2011 |
| | | | WO | 2009024596 A1 | 26-02-2009 |
| WO 9945736 | A1 | 10-09-1999 | AU | 765049 B2 | 04-09-2003 |
| | | | AU | 2756499 A | 20-09-1999 |
| | | | BR | 9908577 A | 21-11-2000 |
| | | | CA | 2322296 A1 | 10-09-1999 |
| | | | CN | 1292981 A | 25-04-2001 |
| | | | EP | 1060631 A1 | 20-12-2000 |
| | | | JP | 4271853 B2 | 03-06-2009 |
| | | | JP | 2002506334 A | 26-02-2002 |
| | | | US | 2001053695 A1 | 20-12-2001 |
| | | | WO | 9945736 A1 | 10-09-1999 |

EPO FORM P0459

For more details about this annex : see Official Journal of the European Patent Office, No. 12/82